# EUROPÄISCHE PATENTANMELDUNG

(11) **EP 1 925 918 A2**
(43) Veröffentlichungstag der Anmeldung: **28.05.2008**
(21) Anmeldenummer: 07119890.7
(22) Anmeldetag: 02.11.2007
(51) Int. Cl.: G01F 23/00

(54) **Anschlussbox zür Übertragung von einem signal**

(30) Priorität: 27.11.2006 DE 102006055897; 27.11.2006 DE 102006055898; 27.11.2006 DE 102006055900; 27.11.2006 US 861233 P; 27.11.2006 US 861232 P; 27.11.2006 US 861234 P
(71) Anmelder: VEGA Grieshaber KG, 77709 Wolfach (DE)
(72) Erfinder: Fehrenbach, Josef, 77716, Haslach (DE); Deck, Thomas, 77709, Wolfach (DE); Guenter, Klaus, 78733, Aichhalden (DE)
(74) Vertreter: Kopf, Korbinian Paul

(57) **Zusammenfassung**

Feldgeräte zum Messen eines Drucks oder eines Füllstands sind über eine Kabel- oder Funkverbindung mit stationär angeordneten Auswerte- und Anzeigegeräten verbunden. Zur Bereitstellung einer flexiblen Parametrisierung oder Messwertabfrage ist eine Anschlussboxübertragung von Signalen zwischen Feldgerät und Bediengerät angegeben, welche einen Feldgeräteanschluss und einen Schnittstellenanschluss aufweist. Feldgeräteanschluss und Schnittstellenanschluss sind zur Übertragung der Signale kominunizierfähig miteinander gekoppelt..

## Beschreibung

### Technisches Gebiet

Die Erfindung betrifft das technische Gebiet der Füllstandmessung und Druckmessung. Insbesondere betrifft die Erfindung eine Anschlussbox zur Übertragung von einem Signal zwischen einem Feldgerät und einem Bediengerät, die Verwendung einer Anschlussbox zur Füllstandmessung oder zur Druckmessung, sowie ein Verfahren zum Übertragen eines Signals zwischen einem Feldgerät und einem Bediengerät mit einer Anschlussbox.

### Hintergrund der Erfindung

Zur Messung eines Füllstands von Flüssigkeiten und Feststoffen in Behältern wird ein Füllstandmessgerät üblicherweise an oder in der Behälterwand montiert. Das Füllstandmessgerät sendet anschließend Wellen entweder geführt durch einen Wellenleiter oder abgestrahlt Über eine Antenne in Richtung des Füllgutes. Die am Füllgut reflektierten Wellen werden anschließend von der Messvorrichtung wieder empfangen. Aus der daraus ermittelbaren Laufzeit ergibt sich der Abstand zwischen dem Sensor und dem Füllgut und aus der Kenntnis der relativen Position des Sensors zum Behälterboden die gesuchte Füllhöhe.

Die gemessenen Daten werden, ggf. nach einer Zwischenspeicherung und/oder Vorabauswertung an ein Bedien- oder Auswertegerät übertragen. Auch kann es sich bei dem Gerät um eine bloße Anzeigeeinrichtung handeln. Im Gegenzug dazu können die Feldgeräte über das Bediengerät parametriert oder getriggert (also zu einer Messung veranlasst) werden. Für diesen bidirektionalen Datenaustausch sind Datenübertragungswege notwendig, über KK:eg welche die Feldgeräte mit den Bediengeräten, Auslesegeräten oder Anzeigegeräten gekoppelt sind.

Die einzelnen Komponenten Feldgerät und Auswerte-/Anzeigegerät bzw. Bediengerät sind in der Regel fest installiert. Das Feldgerät befindet sich beispielsweise am Deckel eines hohen Füllgutbehälters und ist über ein Datenkabel mit einem in einem Kontrollraum angeordneten Auswerte-/Anzeigegerät verbunden. Eine Geräteparametriezwng oder ein Ablesen der Messdaten ist somit nur direkt am Feldgerät oder im Kontrollraum möglich.

### Darstellung der Erfindung

Es ist eine Aufgabe der vorliegenden Erfindung, eine flexible Kommunikation zwischen dem Feldgerät und dem Bediengerät bereitzustellen.

Gemäß einem Ausführungsbeispiel der vorliegenden Erfindung ist eine Anschlussbox zur Übertragung von einem Signal zwischen einem Feldgerät und einem Bediengerät angegeben, die Anschlussbox aufweisend einen Feldgeräteanschluss zum Anschluss der Box an das Feldgerät und einem Schnittstellenanschluss zum Anschluss der Box an einen Schnittstellenadapter, wobei der Feldgeräteanschluss und der Schnittstellenanschluss zur Übertragung des Signals kommunizierfähig miteinander gekoppelt sind, wobei der Schnittstellenanschluss zum direkten Anschluss der Box an ein Anzeige- und Bediezagerät ausgeführt ist und wobei das Feldgerät ein Füllstandmessgerät oder ein Druckmessgerät ist.

In anderen Worten wird eine Anschlussbox angegeben, welche einerseits direkt an das Feldgerät oder zumindest an eine Datenleitung angeschlossen werden kann, die vom Feldgerät zu einem externen Auswertegerät führt. Weiterhin weist die Anschlussbox einen Schnittstellenanschluss auf, an welchen beispielsweise ein Schnittstellenadapter angeschlossen werden kann. Der Schnittstellenadapter kann dann dafür eingesetzt werden, das Messsignal vom Feldgerät in beispielsweise ein USB-Signal umzuwandeln. Natürlich kann, je nach Auslegung des Schnittstellenadapters, auch eine Umwandlung in ein anderes Signalformat erfolgen.

Auf diese Weise kann die Datenleitung zwischen Feldgerät und Auswerte-/Anzeigegerät oder einer Bedieneinheit "angezapft" werden, um eine Kommunikation bzw. einen Datenaustausch mit dem Feldgerät vor Ort zu ermöglichen. Ein Servicetechniker muss dann nicht erst den Tank hinaufklettern oder sich in den Kontrollraum begeben. Vielmehr kann er mit Hilfe seiner kleinen Anschlussbox, die in verschiedenen Größen und Formen ausgeführt sein kann, und beispielsweise einfach in einer Hemdtasche mitgetragen werden kann, dem Datenpfad zwischen dem Feldgerät und dem Kontrollraum direkt auf einfache Weise anzapfen.

Gemäß einem weiteren Ausführungsbeispiel der vorliegenden Erfindung ist das Signal ausgewählt aus der Gruppe bestehend aus einem HART-Signal, einem I²C-Signal, einem Profibus-Signal, einem Fieldbus Foundation-Signal, einem 4...20mA-Signal und einem Schaltsignal.

Kommuniziert also das Feldgerät mit der Außenwelt über eines der oben genannten Signale, kann die Anschlussbox an den Signalweg angeschlossen werden (diesen also anzapfen). Der Schnittstellenanschluss der Box ermöglicht dann einen weiterführenden Anschluss (über eine Schnittstelle), beispielsweise an einen PC oder an ein Laptop (zum Beispiel über eine USB-Schnittstelle).

Gemäß einem weiteren Ausführungsbeispiel der vorliegenden Erfindung ist der Feldgeräteanschluss zum Anschluss an eine HART-Leitung ausgeführt.

Weiterhin weist, gemäß einem weiteren Ausführungsbeispiel der vorliegenden Erfindung, der Feldgeräteanschluss der Anschlussbox zum Anschluss an die HART-Leitung ein HART-Kabel mit zwei Anschlusssteckern auf.

Mit Hilfe der beiden Anschlussstecker kann das HART-Kabel angezapft werden. Alternativ kann das Signal auch direkt am Feldgerät oder direkt an der Auswerteeinheit im Kontrollraum abgegriffen werden.

Somit ist ein äußerst flexibler Zugriff auf die Signalleitung zur Parametrierung oder zum Auslesen des Feldgeräts bereitgestellt.

Gemäß einem weiteren Ausführungsbeispiel der vorliegenden Erfindung ist der Feldgeräteanschluss zum Anschluss an einen I²C-Bus ausgeführt.

Gemäß einem weiteren Ausführungsbeispiel der vorliegenden Erfindung weist der Feldgeräteanschluss zum Anschluss an den I²C-Bus ein I²C-Bus-Kabel auf.

Beispielsweise kann, gemäß einem weiteren Ausführungsbeispiel der vorliegenden Erfindung, die Box sowohl das HART-Kabel als auch das I²C-Bus-Kabel aufweisen.

I²C oder I2C oder IIC (für Inter-Integrated Circuit) ist ein serieller Bus für Computersysteme. Er kann beispielsweise benutzt werden, um Geräte an ein Embedded System oder eine Hauptplatine anzuschließen.

Das HART-Protokoll (Highway Addressable Remote Transmitter) kann insbesondere als ein offenes Master-Slave-Protokoll für busadressierbare Feldgeräte bezeichnet werden. Es kann eine Methode implementieren, Daten mittels Frequency Shift Keying (FSK), aufgesetzt auf dem 4...20mA-Prozesssignal, zu übertragen, um Fernkonfigurationen und Diagnoseüberprüfung zu ermöglichen.

Sowohl I²C als auch HART eignen sich als Protokoll zur Kommunikation mit einem Feldgerät, z. B. mit einem Füllstandsmessgerät oder mit einem Druckmessgerät.

Bei einem HART-Signal, das dem HART-Protokoll entspricht, handelt es sich um ein digitales Signal zur Übertragung von Messwerten und/oder Parametern. Das digitale HART-Signal ist auf ein 4...20mA-Signal aufmoduliert. Folglich lässt sich das digitale Signal parallel zu dem analogen 4...20mA-Signal übertragen. Findet eine solche parallele Übertragung von analogen und digitalen Signalen statt, kann an einem HART-Bus nur ein Feldgerät angeschlossen sein.

Andererseits können in einem sog. Multi-Drop-Modus bis zu 15 digitale Feldgeräte an einen HART-Bus angeschlossen sein. Der analoge Strom ist dabei im Wesentlichen auf 4 mA eingestellt. Die Feldgeräte tauschen im Multi-Drop-Modus ein digital codiertes Signal aus. Bei dem digitalen Signal handelt es sich um ein frequenzmoduliertes Signal, wobei das frequenzmodulierte Signal beispielsweise die beiden Frequenzen 1200 Hz und 2200 Hz einnehmen kann.

Feldgeräte im Sinne dieser Anmeldungen können jede Art von Messgeräten sein, beispielsweise Füllstandmessgeräte, Druckmessgeräte, Grenzstanderfassungsmessvorrichtungen oder Temperaturmessvorrichtungen, um nur einige Beispiele zu nennen. Zur Erfassung können dabei unterschiedliche physikalische Effekte ausgenutzt werden. Die Messwerterfassung kann mit Hilfe von Radarstrahlen, Ultraschall, Vibration, geführter Mikrowelle (TDR, Time Domain Reflexion) oder kapazitiven Effekten erfolgen.

Bei dem Anzeige- und Bediengerät handelt es sich, gemäß einem weiteren Ausführungsbeispiel der vorliegenden Erfindung, um ein PLICSCOM-Gerät der Firma VEGA.

Das PLICSCOM-Gerät kann von der Box abgenommen werden und ermöglicht sowohl eine Feldgeräteparametrierung als auch ein Ablesen und Speichern der empfangenen Messsignale.

Die Anzeige-/Bedieneinrichtung kann also ein Mensch-Maschine-Interface für das Feldgerät bereitstellen. Über die Anzeige-/Bedieneinrichtung kann ein Nutzer das Feldgerät parametrieren oder sich empfangene Werte anzeigen lassen. Weiterhin kann über das Anzeige- und Bediengerät beispielsweise auch zwischen den Betriebszuständen des Feldgeräts umgeschaltet werden.

Gemäß einem weiteren Ausführungsbeispiel der vorliegenden Erfindung weist der Feldgeräteanschluss einen Adapterstecker zum Anschluss an ein Serie 50-Gerät der Firma VEGA auf.

Somit können auch ältere Geräte an die Box angeschlossen werden.

Gemäß einem weiteren Ausführungsbeispiel der vorliegenden Erfindung ist der Adapterstecker derart codiert, dass ein falsches Anschließen des Adaptersteckers an das Serie 50-Gerät verhindert wird. Beispielsweise kann aufgrund der Steckercodierung der Stecker nicht um 180° verdreht eingesteckt werden. Eine entsprechende Codierung kann sich auch auf der anderen Seite des Steckers befinden, welche den Stecker mit den I²C-Kabel der Anschlussbox verbindet.

Gemäß einem weiteren Ausführungsbeispiel der vorliegenden Erfindung ist die Anschlussbox zur Signalübertragung von dem Bediengerät zu dem Feldgerät ausgeführt, wobei es sich bei dem Signal um Parametrierungsdaten zur Parametrierung des Feldgeräts handelt.

Gemäß einem weiteren Ausführungsbeispiel der vorliegenden Erfindung ist die Anschlussbox zur Signalübertragung von dem Feldgerät und dem Bediengerät ausgeführt, wobei es sich bei dem Signal um Messdaten des Feldgeräts handelt.

Somit ermöglicht die Box also eine flexible Parametrierung der Feldgeräte bzw. eine flexible Messwertauslesung.

Gemäß einem weiteren Ausführungsbeispiel der vorliegenden Erfindung weist die Anschlussbox eine Energieversorgung zur autarken Versorgung des Schnittstellenadapters mit elektrischer Energie auf.

Bei der Energieversorgung kann es sich beispielsweise um eine Batterie handeln, Auch kann, gemäß einem weiteren Ausführungsbeispiel der Erfindung, ein aufladbarer Akku vorgesehen sein, der entweder extern aufladbar ist oder beispielsweise an ein Solarzellenmodul der Anschlussbox gekoppelt ist. Auf diese Weise kann der Akkumulator bei Lichteinstrahlung aufgeladen werden, ohne dass eine externe Energieversorgung notwendig ist. Diese Ausführungsform eignet sich insbesondere zum Einsatz in Gegenden, in denen für längere Zeit nicht auf eine Energieversorgung zum Aufladen des Akkus zurückgegriffen werden kann.

Gemäß einem weiteren Ausführungsbeispiel der vorliegenden Erfindung weist die Anschlussbox einen von außen zugänglichen Hohlraum auf, der zur Lagerung von einem HART-Kabel, einem I²C-Bus-Kabel, einem USB-Kabel und einem Adapterstecker ausgeführt ist.

Beispielsweise ist die Anschlussbox aufklappbar gestaltet und weist in ihrem Inneren entsprechende Haltevorrichtungen, wie beispielsweise Klettverschlüsse oder Gummibänder, auf, durch welche die Kabel fixiert werden können. Durch Zuklappen der Anschlussbox sind die Kabel vor äußeren Einflüssen, wie Feuchtigkeit und dergleichen, geschützt. Vor Ort kann der Servicetechniker dann die Anschlussbox einfach aufklappen und das entsprechende Kabel herausnehmen, um die Datenleitung anzuzapfen.

Gemäß einem weiteren Ausführungsbeispiel der vorliegenden Erfindung ist der Feldgeräteanschluss als Funkschnittstelle zum drahtlosen Übertragen des Signals zwischen der Box und dem Feldgerät ausgebildet.

Die Anschlussbox weist beispielsweise ein Funkmodul auf, über welches eine Kommunikation zwischen dem Feldgerät und der Anschlussbox bereitgestellt wird. Beispielsweise erfolgt die Funkkommunikation über WLAN (Wireless Local Area Network), ISM (durch welches eine große Reichweite von etwa einem Kilometer ermöglicht wird), Bluetooth oder ZIGBEE. Es sind auch andere Übertragungsprotokolle möglich.

Gemäß einem weiteren Ausführungsbeispiel der vorliegenden Erfindung weist der Schnittstellenanschluss Schleifkontakte zum Anschluss der Box an den Schnittstellenadapter auf.

Auf diese Weise kann der Schnittstellenadapter durch eine einfache Schraubbewegung an den Schnittstellenanschluss angeschlossen werden.

Gemäß einem weiteren Ausführungsbeispiel der vorliegenden Erfindung ist die Verwendung einer Anschlussbox zur Übertragung von einem Signal zwischen einem Feldgerät und einem Bediengerät angegeben, wobei das Feldgerät ein Füllstandmessgerät oder ein Druckmessgerät ist.

Weiterhin ist ein Verfahren zur Übertragung von einem Signal zwischen einem Feldgerät und einem Bediengerät mit Hilfe einer Anschlussbox angegeben, bei dem die Box an das Feldgerät angeschlossen wird, die Box an einen Schnittstellenadapter angeschlossen wird und das Signal vom Feldgerät über den Feldgeräteanschluss an den Schnittstellenanschluss und das Bediengerät übertragen wird, wobei das Feldgerät ein Füllstandmessgerät oder ein Druckmessgerät ist.

Im Folgenden werden mit Verweis auf die Figuren bevorzugte AusfÜhrungsbeispiele der vorliegenden Erfindung beschrieben.

### Kurze Beschreibung der Zeichnunger

Fig. 1 zeigt eine erste Anwendung der Anschlussbox gemäß einem Ausführungsbeispiel der vorliegenden Erfindung.
Fig. 2 zeigt eine zweite Anwendung der Anschlussbox gemäß einem weiteren Ausführungsbeispiel der vorliegenden Erfindung,
Fig. 3 zeigt eine dritte Anwendung der Anschlussbox gemäß einem weiteren Ausführungsbeispiel der vorliegenden Erfindung.
Fig. 4 zeigt eine vierte Anwendung der Anschlussbox gemäß einem weiteren Ausführungsbeispiel der vorliegenden Erfindung.
Fig. 5 zeigt eine fünfte Anwendung der Anschlussbox gemäß einem weiteren Ausführungsbeispiel der vorliegenden Erfindung.
Fig. 6 zeigt eine sechste Anwendung der Anschlussbox gemäß einem weiteren Ausführungsbeispiel der vorliegenden Erfindung.
Fig. 7 zeigt eine siebte Anwendung der Anschlussbox gemäß einem weiteren Ausführungsbeispiel der vorliegenden Erfindung.
Fig. 8 zeigt eine achte Anwendung der Anschlussbox gemäß einem weiteren Ausführungsbeispiel der vorliegenden Erfindung.
Fig. 9 zeigt eine neunte Anwendung der Anschlussbox gemäß einem weiteren Ausführungsbeispiel der vorliegenden Erfindung.
Fig. 10 zeigt eine zehnte Anwendung der Anschlussbox gemäß einem weiteren Ausführungsbeispiel der vorliegenden Erfindung.
Fig. 11 zeigt eine elfte Anwendung der Anschlussbox gemäß einem weiteren Ausführungsbeispiel der vorliegenden Erfindung.
Fig. 12 zeigt eine zwölfte Anwendung der Anschlussbox gemäß einem weiteren Ausführungsbeispiel der vorliegenden Erfindung.
Fig. 13 zeigt eine dreizehnte Anwendung der Anschlussbox gemäß einem weiteren Ausführungsbeispiel der vorliegenden Erfindung.
Fig. 14 zeigt eine vierzehnte Anwendung der Anschlussbox gemäß einem weiteren Ausführungsbeispiel der vorliegenden Erfindung.
Fig. 15 zeigt einen Adapterstecker 108 gemäß einem Ausführungsbeispiel der vorliegenden Erfindung in vier unterschiedlichen perspektivischen Ansichten.
Fig. 16 zeigt den Adapterstecker der Fig. 15 in vier weiteren schematischen Darstellungen gemäß einem Ausführungsbeispiel der vorliegenden Erfindung.
Fig. 17 zeigt drei schematische Darstellungen des Schnittstellenanschlusses mit seinen Schleifkontakten oder Federkontakten gemäß einem weiteren Ausführungsbeispiel der vorliegenden Erfindung.
Fig. 18 zeigt eine schematische Detailansicht der Federkontakte des Sensors gemäß einem Ausführungsbeispiel der vorliegenden Erfindung.
Fig. 19 zeigt eine schematische Darstellung der Anschlussbox, von vier verschiedenen Richtungen aus betrachtet gemäß einem weiteren Ausführungsbeispiel der vorliegenden Erfindung.
Fig. 20 zeigt drei weitere perspektivische Darstellungen der Anschlussbox 100 in aufgeklapptem Zustand gemäß einem Ausführungsbeispiel der vorliegenden Erfindung.
Fig. 21 zeigt die Anschlussbox in drei weiteren perspektivischen Darstellungen und mit einem I²C-Bus-Kabel und einem Anschlussstecker gemäß einem Ausführungsbeispiel der vorliegenden Erfindung.
Fig. 22 zeigt eine schematische Darstellung einer Anschlussbox gemäß einem Ausführungsbeispiel der vorliegenden Erfindung.
Fig. 23 zeigt eine weitere schematische Darstellung einer Anschlussbox gemäß einem Ausführungsbeispiel der vorliegenden Erfindung.

### Detaillierte Beschreibung von exemplarischen Ausführungsformen

Die Darstellungen in den Figuren sind schematisch und nicht maßstäblich.

In der folgenden Figurenbeschreibung werden für die gleichen oder ähnlichen Elemente die gleichen Bezugsziffern verwendet.

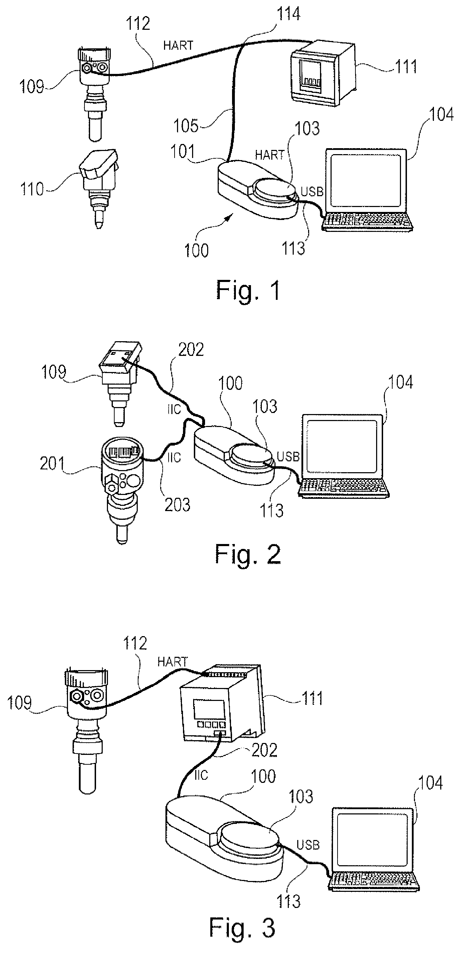

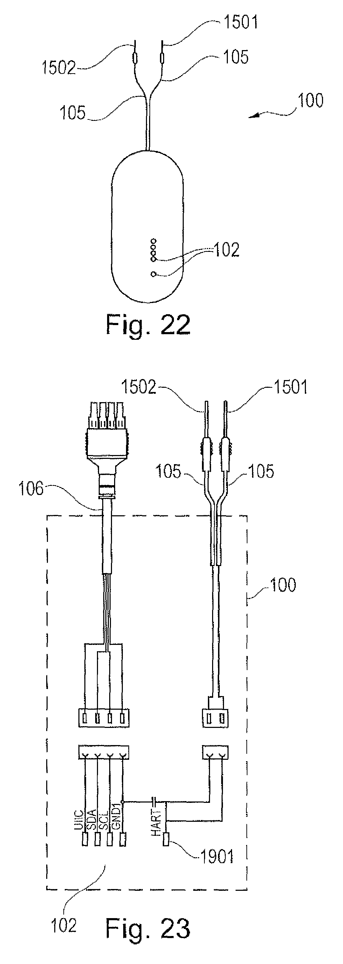

Fig. 1 zeigt eine schematische Darstellung einer ersten Anwendung der Anschlussbox gemäß einem Ausführungsbeispiel der vorliegenden Erfindung. Die Anschlussbox 100 weist einen Feldgeräteanschluss 101 zum Anschluss der Box an das Feldgerät 109 auf. Der Anschluss der Box 100 an das Feldgerät 109 kann beispielsweise direkt am Feldgerät oder am Datenkabel 112 beispielsweise in Form einer Anzapfung 114 erfolgen. Hierfür ist ein Anschlusskabel 105 vorgesehen (siehe Figs. 22 und 23).

Bei der Datenleitung 112 zwischen dem Feldgerät 109 und dem Auswerte- und Anzeigegerät 111 handelt es sich um ein sog. HART-Kabel. Hierfür weist das HART-Anschlusskabel 105 beispielsweise zwei Stecker oder Klemmen auf, über welche eine Ankopplung an das Datenkabel 112 ermöglicht wird. Die Auswerte-/Anzeigeeinheit 111 ist beispielsweise im Kontrollraum angeordnet und dient u. a. der Energieeinspeisung. Auf die Oberseite des Feldgeräts 109 kann ein zusätzliches Anzeigegerät angebracht werden. Hierbei handelt es sich beispielsweise um ein sog. PLICSCOM-Gerät der Firma VEGA.

Die Anzapfung oder Kopplung der Datenleitung 112 kann auch am Speisegerät (parallel zum HART-Kabel 112) erfolgen. Über die Anschlussleitung 105 ist ein bidirektionaler Datenaustausch möglich. Das Feldgerät kann also einerseits parametriert werden. Andererseits können Messwerte ausgelesen werden. Natürlich ist auch der Anschluss an weitere Feldgeräte 110 möglich.

Die Parametrierung des HART-Sensors 109 erfolgt über die HART-Leitungen 112, 105 beispielsweise mit PACTware. PACTware ist eine hersteller- und feldbusunabhängige Software zur bedienung von Feldgeräten.

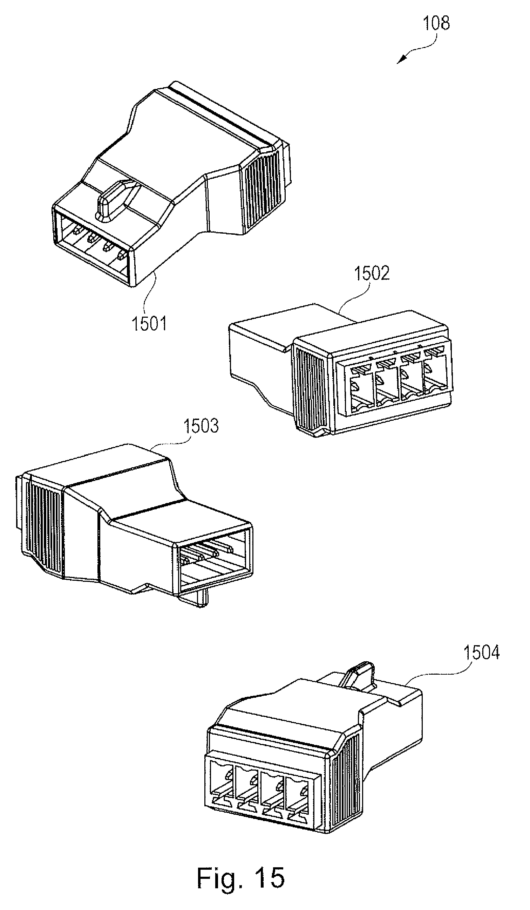

Die Anschlussbox 100 dient als mechanischer Adapter zwischen der HART-Leitung 112 und einer Bedieneinheit 104. Bei der Bedieneinheit 104 handelt es sich beispielsweise um einen Personal Computer (PC), oder aber um ein Laptop, ein PDA, ein Mobiltelefon, oder anderen Kommunikationseinrichtungen. Die Bedieneinheit 104 kann die einzige Bedieneinheit sein oder als Alternative zum Gerät 111 dienen. Zur Kommunikation zwischen dem Feldgerät 109 und der Bedieneinheit 104 ist eine USB-Leitung 113 vorgesehen, welche die Bedieneinheit 104 mit einem Schnittstellenadapter 103 verbindet. Der Schnittstellenadapter 103 ist an den Schnittstellenanschluss 102 (siehe Fig. 15) der Anschlussbox angeschlossen.

Die Messwertübertragung kann entweder analog (das heißt über eine 4...20mA Schleife) oder digital im sog. Multi-Drop-Verfahren erfolgen.

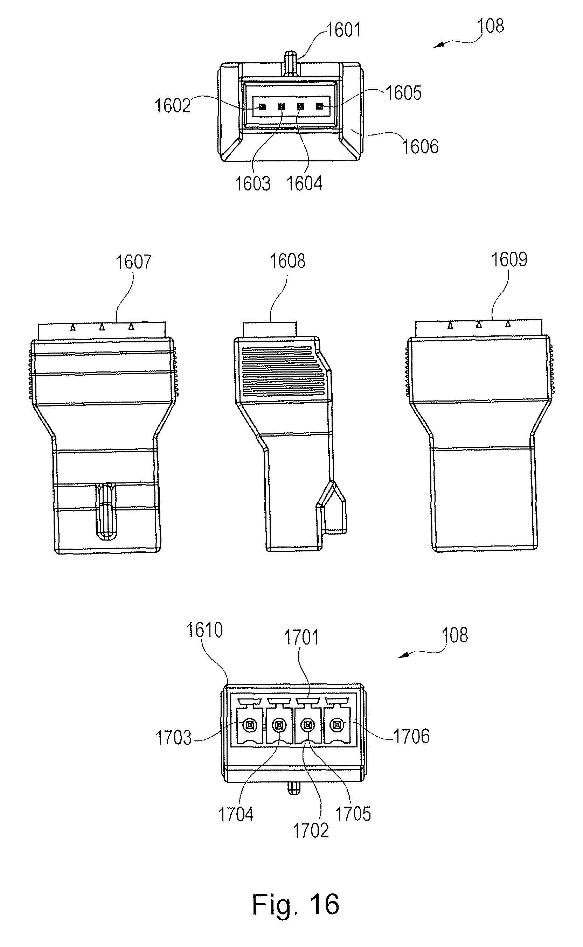

Fig. 2 zeigt eine zweite Anwendung der Anschlussbox gemäß einem weiteren Ausführungsbeispiel der vorliegenden Erfindung. Hier ist die Anschlussbox 100 Über entsprechende I²C-Leitungen 202, 203 direkt an die Feldgeräte 109, 201 angeschlossen. Bei dem Gerät 109 handelt es sich beispielsweise um ein Feldgerät, auf welches der Schnittstellenadapter 103 nicht direkt aufgesetzt werden kann (beispielsweise ein sog. Serie 50-Gerät der Firma VEGA). Hierfür wird ein Adapterstecker 108 (siehe Fig. 15 und 16) verwendet. Der Adapterstecker 108 ermöglicht die Ankopplung der I²C-Leitung 203 der Anschlussbox 100 direkt an den Geräteanschluss des Serie 50-Geräts 201. Bei anderen Geräten kann ein Schnittstellenadapterdirekt auf die Feldgeräteschnittstelle aufgesetzt werden, an welchen dann das USB-Kabel 113 eingesteckt werden kann.

Der Schnittstellenadapter 103 ist beispielsweise über die Anschlussbox 100 und die I²C-Buchse des Feldgeräts 201 mit dem Feldgerät 201 verbunden. Die Länge des I²C-Kabels 201 kann bis zu 25 m betragen. Natürlich kann das Kabel aber auch länger ausgeführt sein.

Auch ist es möglich, den Schnittstellenadapter ohne die Verwendung eines Datenkabels direkt auf den Sensor aufzustecken. Die Verwendung des Datenkabels ist aber beispielsweise dann vorteilhaft, wenn das Feldgerät nicht frei zugänglich ist oder nur mit erhöhtem Aufwand zugänglich ist, weil es sich beispielsweise in großer Höhe oder weit entfernt befindet.

Fig. 3 zeigt eine dritte Anwendung der Anschlussbox gemäß einem weiteren Ausführungsbeispiel der vorliegenden Erfindung. Es ist ein Feldgerät 109 vorgesehen, welches über eine HART-Leitung 112 mit einem Speise- und Bediengerät 11 kommuniziert. An das Speise- und Bediengerät 111 sind mehrere Feldgeräte parallel anschließbar (beispielsweise bis zu fünf Feldgeräte). Das Speise- und Bediengerät 111 weist beispielsweise eine sog. SPS-Funktion (speicherprogrammierte Steuerung) auf und ist internetfähig.

Bei dem Gerät 111 handelt es sich beispielsweise um ein MET der Fa. VEGA. Die Anschlussbox 100 ist über die I²C-Leitung 202 an das Speise- und Bediengerät 111 angeschlossen und kann einerseits zur Parametrierung des Speise- und Bediengeräts 111 und andererseits zum Zugriff bzw. zur Abfrage des Sensors 109 eingesetzt werden.

Auch ist eine Parametrierung des Sensors 109 möglich. Hierfür ist die Anschlussbox 100 über den Schnittstellenadapter 103 und die USB-Leitung 113 an ein Laptop 104 oder ein anderes Kommunikationsgerät bzw. Eingabe/Ausgabegerät angeschlossen.

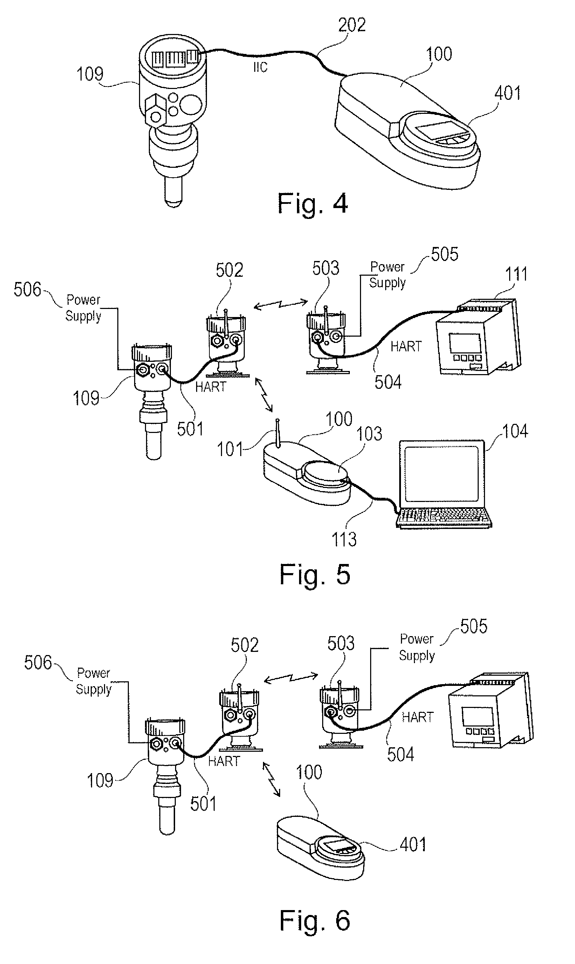

Fig. 4 zeigt eine vierte Anwendung der Anschlussbox gemäß einem weiteren Ausführungsbeispiel der vorliegenden Erfindung. Wie in Fig. 4 zu erkennen, ist die Anschlussbox 100 über eine I²C-Leitung 202 an den Füllstandsensor 109 angeschlossen. Ein Anzeige- und Bediengerät 401 ist direkt auf der Anschlussbox 100 montiert, also am Schnittstcllenanschluss 102 angeschlossen. Auf diese Weise wird eine abgesetzte, mobile Bedieneinheit bereitgestellt.

Bei einer autarken Energieversorgung des Anzeige- und Bediengeräts 401, beispielsweise durch eine Batterie innerhalb der Anschlussbox 100, ist auch ein Anschluss an einen HART-Ausgang des Feldgeräts 109 möglich.

Fig. 5 zeigt eine fünfte Anwendung der Anschlussbox gemäß einem weiteren Ausführungsbeispiel der vorliegenden Erfindung. Es handelt sich hier um eine kabellose Funkübertragung zur Parametrierung des Sensors 109. Hierfür ist der Sensor 109 über HART-Leitung 501 mit einem Funkmodul 502 verbunden, welches an eine Energieversorgung 506 angeschlossen ist und somit den Sensor 109 mit Energie versorgt. Das Funkmodul kann mit einem zweiten Funkmodul 503 kabellos kommunizieren. Das zweite Funkmodul 503 weist ebenfalls eine Energieversorgung 505 auf und ist mit dem Speise- und Bediengerät 111 über eine HART-Leitung 504 verbunden.

Die Anschlussbox 100 weist neben dem Schnittstellenadapter 103 ein Datenkabel 113 auf, über welches sie mit dem Laptop 104 verbunden ist. Weiterhin weist die Anschlussbox 100 eine Funkschnittstelle zum drahtlosen Übertragen von Signalen zwischen der Box 100 und dem Feldgerät 109 auf. Auf diese Weise kann auf die Funkstrecke zwischen der Feldgerätefunkeinheit 502 und der bedien- bzw. auswerteseitigen Funkeinheit 503 zugegriffen werden, um beispielsweise das Feldgerät 109 zu parametrieren.

Fig. 6 zeigt eine sechste Anwendung der Anschlussbox gemäß einem weiteren Ausführungsbeispiel der vorliegenden Erfindung. Auch hier handelt es sich um eine drahtlose Datenübertragung. Die Anschlussbox 100 weist eine interne Stromversorgung in Form einer Batterie, einem Akku oder einer externe Energieversorgung auf. Der Anschluss an einen PC oder dergleichen ist nicht erforderlich, da die Anschlussbox an das Anzeige- und Bedienmodul 401 angeschlossen ist.

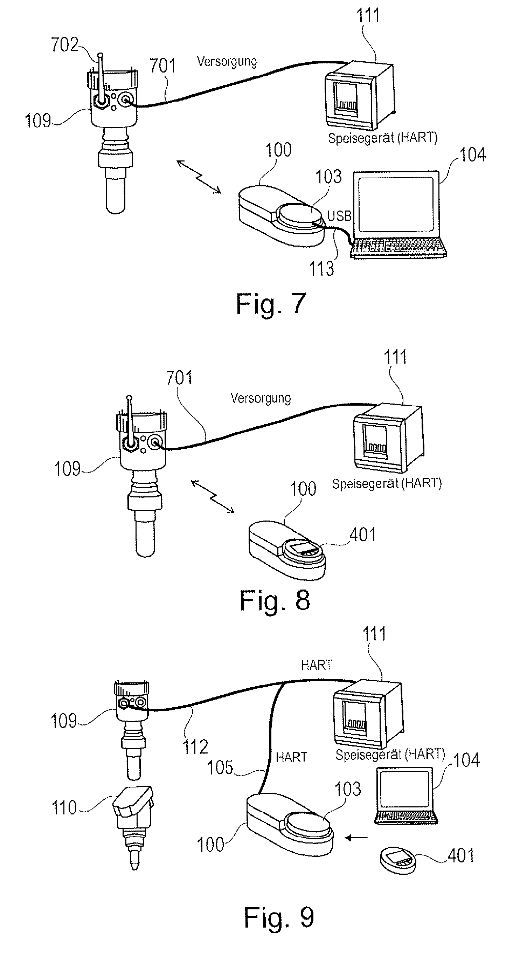

Fig. 7 zeigt eine weitere Anwendung der Anschlussbox gemäß einem Ausführungsbeispiel der vorliegenden Erfindung. Hier ist ein Funkmodul 702 im Sensor 109 integriert. Weiterhin ist der Sensor 109 über Versorgungsleitung 701 an ein Speisegerät 111, beispielsweise über eine HART-Leitung, angeschlossen.

Die Parametrierung des Sensors 109 erfolgt über Funk mit Hilfe der Anschlussbox 100, in welche ebenfalls ein entsprechendes Funkmodul integriert ist.

Fig. 8 zeigt eine weitere Anwendung der Anschlussbox gemäß einem weiteren Ausführungsbeispiel der vorliegenden Erfindung. Ein Laptop 104 oder dergleichen ist nicht erforderlich, weil die Anschlussbox 100 mit dem Anzeige- und Bediengerät 401 gekoppelt ist. Die Energieversorgung der Anschlussbox erfolgt über Batterie oder extern. Auch hier ist ein Funkmodul sowohl im Sensor als auch in der Anschlussbox 100 eingebaut.

Fig. 9 zeigt eine neunte Anwendung gemäß einem weiteren Ausführungsbeispiel der Erfindung. Wie in Fig. 9 zu erkennen, ist die Anschlussbox 100 über das HART-Kabel 105 an die HART-Leitung 112 zwischen dem Speisegerät 111 und dem Sensor 109 angeschlossen. Die Anschlussbox 100 weist eine interne Energieversorgung auf, so dass der analoge Messwert (analoger Stromwert) nicht verfälscht wird. Alternativ zum analogen Messwert-Signal kann der Multi-Drop-Mode (busfähig) verwendet werden. In diesem Fall ist keine interne Energieversorgung der Anschlussbox bzw. des Schnittstellenadapters 103 notwendig. Der Schnittstellenadapter 103 initiiert die Sensordatenaufzeichnung des Sensors 109. Weiterhin ist ein Speichermedium vorgesehen, welches sich entweder innerhalb der Anschlussbox 100 befindet, oder Teil des Schnittstellenadapters 103 ist. Auch kann ein externes Speichermedium angeschlossen werden. Auf diese Weise können Sensordaten über die Anschlussbox 100 aufgezeichnet werden. Die Datenaufzeichnung kann beispielsweise über ein Laptop 104 oder ein Bediengerät 401 hinsichtlich beispielsweise Startpunkt, Endpunkt und Aufzeichnungsintervall eingerichtet werden. Die über die Anschlussbox 100 aufgezeichneten Daten können anschließend beispielsweise über USB ausgelesen werden.

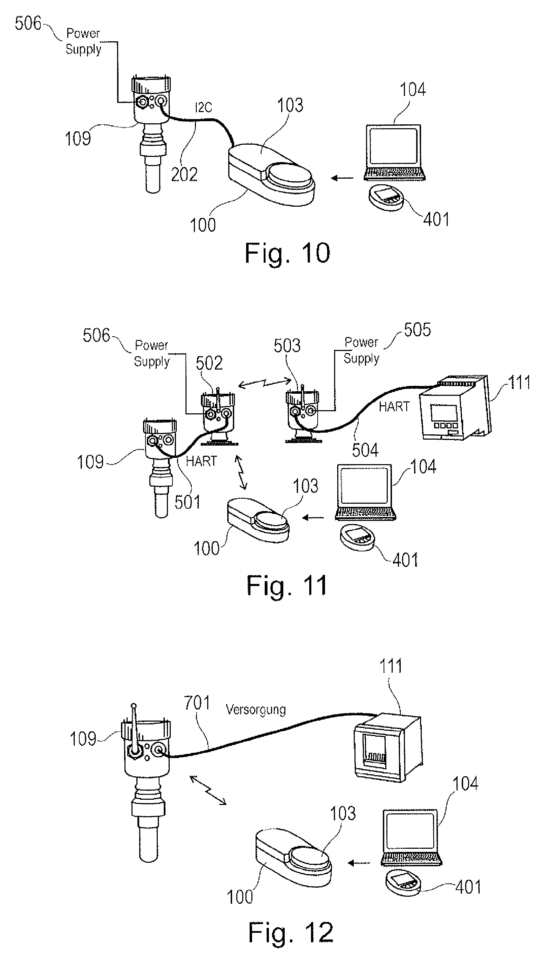

Fig. 10 zeigt eine weitere Anwendung der Anschlussbox gemäß einem weiteren Ausführungsbeispiel der vorliegenden Erfindung. Hier ist der Schnittstellenadapter 103 über eine I²C-Leitung 202 mit dem Sensor 109 verbunden, der wiederum an eine Energieversorgung 506 angeschlossen ist. Der Schnittstellenadapter 103 initiiert die Sensordatenaufzeichnung, Weiterhin wird der Schnittstellenadapter 103 vom Sensor mit Energie versorgt. Auch hier ist ein internes oder externes Speichermedium vorgesehen, um die Sensordaten aufzuzeichnen. Hierbei kann es sich beispielsweise um einen USB-Memory-Stick handeln. Das Speichermedium ist beispielsweise in der Anschlussbox oder im Schnittstellenadapter 103 integriert. Auch hier wird die Aufzeichnung über ein Laptop oder dergleichen 104 oder über das Bediengerät 401 eingerichtet. Ein Auslesen der aufgezeichneten Daten erfolgt beispielsweise über den USB-Anschluss des Schnittstellenadapters 103.

Fig. 11 zeigt eine weitere Anwendung der Anschlussbox gemäß einem weiteren Ausführungsbeispiel der vorliegenden Erfindung. Hierbei handelt es sich um eine Funkübertragung, wie bereits in den Fig. 5 bis 8 beschrieben. Der Schnittstellenadapter 103 ist über ein in der Anschlussbox 100 angebrachtes Funkmodul und dem Funkmodul 502 mit dem Sensor 109 verbunden. Der Schnittstellenadapter 103 initiiert die Sensordatenaufzeichnung und wird von einer Batterie, einem Akku oder einem externen Speisegerät mit Energie versorgt. Wiederum ist ein internes oder externes Speichermedium vorgesehen, um die Sensordaten aufzuzeichnen. Das Einrichten der Aufzeichnung erfolgt wie in den Fällen der Fig. 9 und 10.

Fig. 12 zeigt ein weiteres Ausführungsbeispiel einer Anschlussboxanwendung. Die drahtlose Kommunikation zwischen Anschlussbox 100 und Sensor 109 entspricht dem in Fig. 7 beschriebenen Fall. Auch hier initiiert der Schnittstellenadapter 103 die Sensordatenaufzeichnung und wird von einer Batterie, einem Akku oder extern von einem Speisegerät 111 mit Energie versorgt. Zur Aufzeichnung der Sensordaten ist auch hier ein Speichermedium in der Anschlussbox oder im Schnittstellenadapter 103 integriert oder extern angeschlossen. Auch hier wird das Laptop 104 oder die Bedieneinheit 401 zum Einrichten der Datenaufzeichnung und zum Auslesen der gespeicherten Daten verwendet.

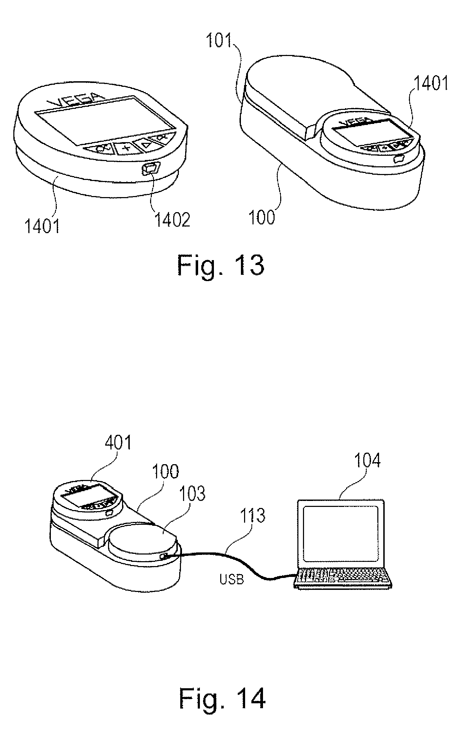

Fig. 13 zeigt eine weitere Anwendung der Anschlussbox gemäß einem weiteren Ausführungsbeispiel der vorliegenden Erfindung. Hierfür ist die Anschlussbox 100 derart ausgeführt, dass an den Schnittstellenanschluss 102 (siehe Fig. 15) eine kombinierte Bedien- und Kommunikationseinheit 1401 angeschlossen werden kann. Bei der kombinierten Bedien- und Kommunikationseinheit 1401 handelt es sich um eine Kombination aus einer Bedieneinheit 401 und einem Schnittstellenadapter 103. Bezugszeichen 1402 zeigt den USB-Anschluss.

Durch die Kombination von Bedieneinheit und Kommunikationseinheit kann eine Bedienung bzw. Ansteuerung des Sensors von der Anschlussbox 100 aus vorgenommen werden, bei gleichzeitiger Möglicheit, die Anschlussbox an ein Laptop anzuschließen, um beispielsweise Daten auszulesen.

Fig. 14 zeigt eine weitere Anwendung der Anschlussbox gemäß einem weiteren Ausführungsbeispiel der vorliegenden Erfindung. Die Anschlussbox 100 weist einen zweiten Schnittstellenanschluss auf, an den die Bedieneinheit 401 angeschlossen werden kann, welcher auch zur Datenspeicherung einsetzbar ist. Somit können die Messdaten in der Bedieneinheit 401 zwischengespeichert werden und nachfolgend kann dann ein Auslesen der Messdaten über den Schnittstellenadapter 103 durch die Ausleseeinheit 104 erfolgen.

Fig. 15 zeigt einen Adapterstecker 108 gemäß einem Ausführungsbeispiel der vorliegenden Erfindung in vier unterschiedlichen perspektivischen Ansichten 1501, 1502, 1503, 1504.

Fig. 16 zeigt den Adapterstecker der Fig. 15 in vier weiteren schematischen Darstellungen. 1606 zeigt eine Frontansicht, 1607, 1608, 1609 zeigen drei Seitenansichten des Adaptersteckers 108 (von oben, von der Seite und von unten) und 1610 zeigt eine Rückansicht des Adaptersteckers 108.

Der Adapterstecker 108 weist vorderseitig verschiedene Kontaktbereiche 1602, 1603, 1604, 1605 zum Anschluss an ein Serie 50-Feldgerät auf. Um zu verhindern, dass der Adapterstecker 108 falsch herum in das Feldgerät eingesteckt wird, ist beispielsweise eine Nase 1601 vorgesehen.

1610 zeigt eine schematische Darstellung des Adaptersteckers 108 in Rückansicht. Auch hier sind vier Anschlussbereiche 1703, 1704, 1705, 1706 zum Anschluss des Adaptersteckers an einen I²C-Stecker des I²C-Kabels 202 der Anschlussbox 100 vorgesehen. Weiterhin ist auch hier eine Verdrehsicherung eingebaut in Form von vier schwalbenschwanzartigen oder anderweitig geformten Einbuchtungen 1701 auf einer ersten Seite und vier gebogenen Auswölbungen 1702 auf einer zweiten Seite des Adaptersteckers 108. Die Auswölbungen 1701, 1702 können auch andere Formen aufweisen, müssen aber mit entsprechenden Einbuchtungen einer Gegenbuchse korrespondieren.

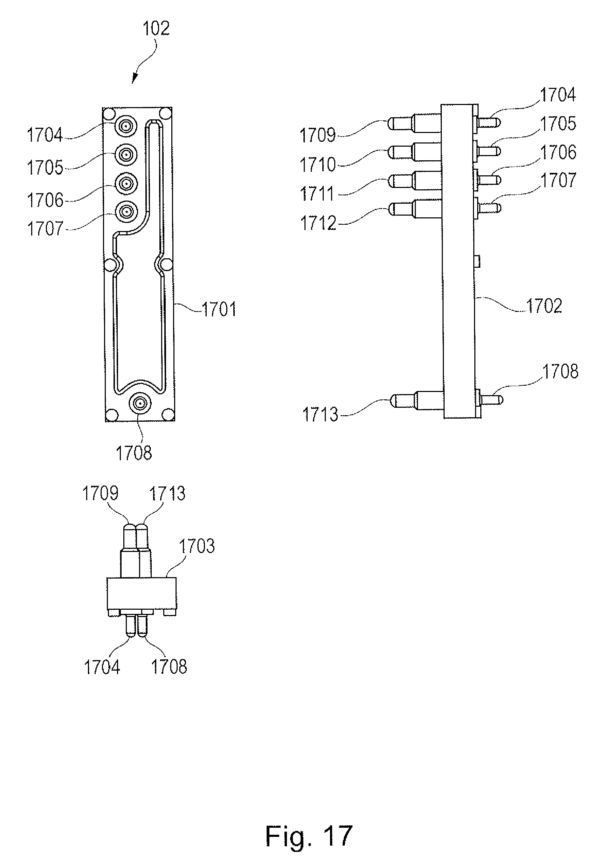

Fig. 17 zeigt drei schematische Darstellungen des Schnittstellenanschlusses 102, 1901 mit seinen Federkontakten 1704, 1705, 1706, 1707, 1708 und 1709, 1710, 1711, 1712, 1713.

Die Darstellung 1701 zeigt die Unterseite des Schnittstellenanschlusses 102, 1901, die Darstellung 1702 zeigt eine Seitenansicht und 1703 zeigt eine Frontalansicht.

Die acht Kontaktstifte 1704 bis 1713 sind jeweils mit entsprechenden Federelementen (nicht gezeigt in Fig. 17) gekoppelt und können in den Grundkörper des Schnittstellenanschlusses 102 zumindest teilweise hineingedrückt werden (entgegen den Federkräften). Wenn nun ein Schnittstellenadapter 103 auf die Anschlussbox 100 aufgeschraubt wird, so werden die oberen Kontaktstifte 1709 bis 1713 gegen entsprechende Kontaktflächen des Schnittstellenadapters 103 gepresst, so dass ein guter, elektrisch leitfähiger Kontakt entsteht.

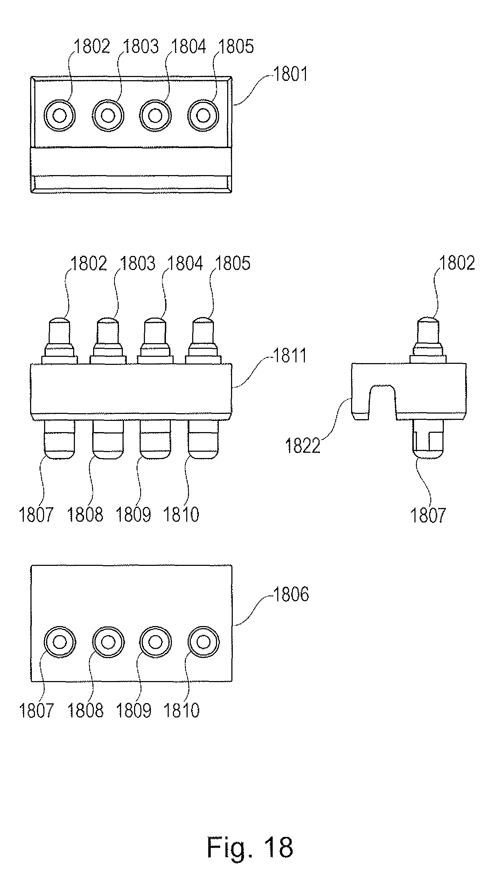

Fig. 18 zeigt eine schematische Detailansicht der Federkontakte 102, 1901 des Sensors 109. 1801 zeigt eine Draufsicht auf die Kontakte 1802, 1803, 1804, 1805. 1806 zeigt eine Draufsicht auf die Kontakte 1807, 1808, 1809, 1810. 1811 zeigt eine erste Seitenansicht der Federkontakte und 1822 zeigt eine zweite Seitenansicht der Federkontakte mit einer um 90° versetzten Blickrichtung.

Die Federkontakte weisen beispielsweise Federelemente auf, durch welche die Kontaktstifte 1802 bis 1805 bzw. 1807 bis 1810 an die korrespondierenden Kontaktflächen gedrückt werden, wenn der Schnittstellenadapter 103 in die Anschlussbox 100 eingeschraubt wird.

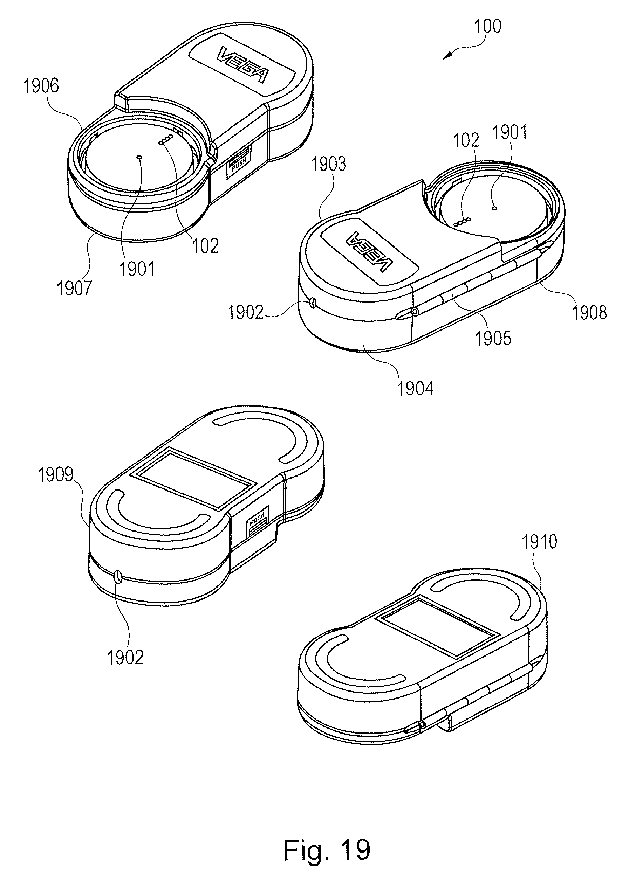

Fig. 19 zeigt eine schematische Darstellung 1907, 1908, 1909 der Anschlussbox 100, von vier verschiedenen Richtungen aus betrachtet. Die Anschlussbox 100 weist einen Anschlussbereich 1906 zur Aufnahme eines Schnittstellenadapters 103 auf. Um den Schnittstellenadapter 103 an die Anschlussbox anzuschließen, sind Schnittstellenanschlüsse 102, 1901 vorgesehen, welche beispielsweise in Form von Federkontakten ausgeführt sind. Schnittstellenanschlüsse 102 dienen der Übertragung eines I²C-Signals, der Schnittstellenanschluss 1901 (in Kombination mit einem der Schnittstellenanschlüsse 102) dient der Übertragung eines HART-Signals.

Weiterhin weist die Box 100 eine Kabeldurchführung 1902 auf, durch welche die HART-Leitung 105 oder das I²C-Bus-Kabel 106 geführt werden kann. Die Box 100 weist ein Deckelelement 1903 und ein Basiselement 1904 auf, welche über ein Scharnier 1905 miteinander verbunden sind, so dass die Box 100 aufgeklappt werden kann.

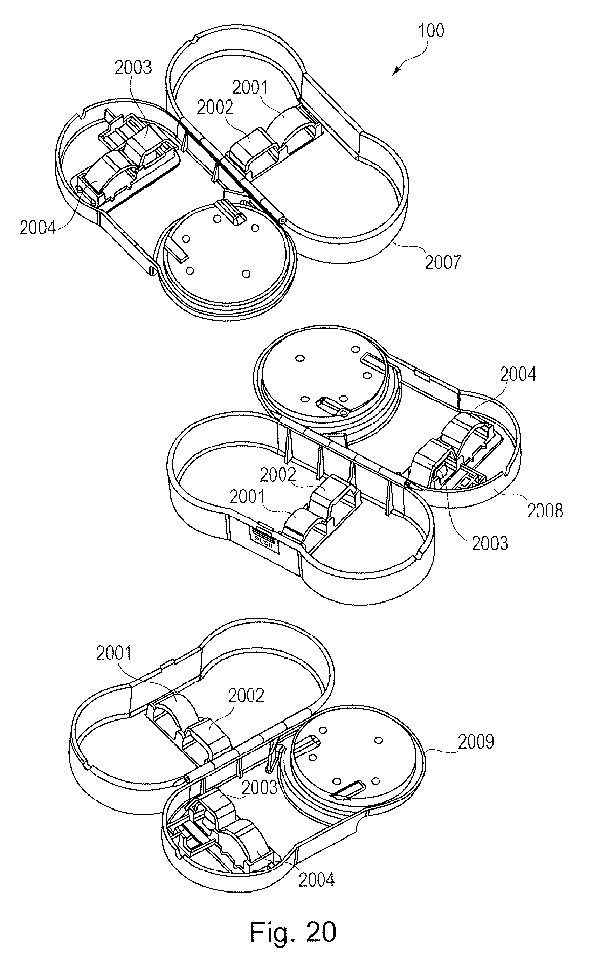

Fig. 20 zeigt drei weitere perspektivische Darstellungen 2007, 2008, 2009 der Anschlussbox 100 in aufgeklapptem Zustand. Es sind Halteelemente 2001, 2001, 2003, 2004 vorgesehen, um die entsprechenden Anschlusskabel 105, 106, 107 und den Adapterstecker 108 aufzunehmen.

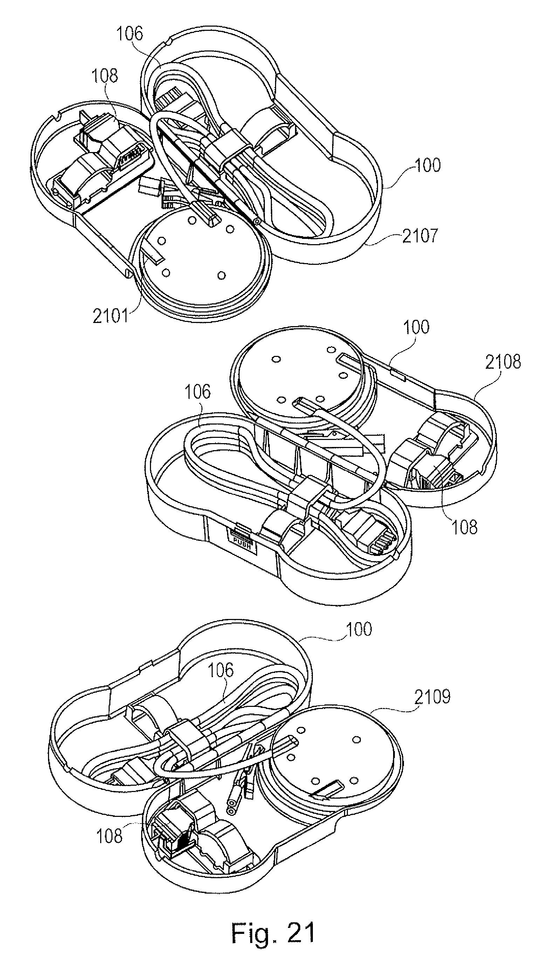

Fig. 21 zeigt die Anschlussbox 100 in drei weiteren perspektivischen Darstellungen 2107, 2108, 2109 und mit einem I²C-Bus-Kabel 106 und einem Anschlussstecker 108.

Weiterhin kann ein HART-Kabel 105 (nicht dargestellt in Fig. 21) vorgesehen sein, welches beispielsweise aus der Buchse 2101 austritt und einen Anschluss an eine HART-Leitung eines Feldgerätes ermöglicht.

Fig. 22 zeigt eine schematische Darstellung einer Anschlussbox 100 gemäß einem weiteren Ausführungsbeispiel der vorliegenden Erfindung. Die Anschlussbox 100 weist Federkontakte 102 zum Anschluss an einen Schnittstellenadapter auf. Eine Detaildarstellung der Federkontakte 102 ist in Fig. 17 gezeigt. Weiterhin weist die Anschlussbox 100 ein HART-Kabel 105 auf, welches einen Feldgeräteanschluss 101 1 bereitstellt. Das HART-Kabel 105 weist zwei Anschlüsse 1501, 1502 auf, welche beispielsweise in Form von Klemmen oder Steckern ausgebildet sind. Über diese beiden Anschlüsse 1501, 1502 ist das HART-Kabel 105 an ein Feldgerät anschließbar.

Fig. 23 zeigt eine weitere schematische Darstellung einer Anschlussbox 100 mit einem HART-Kabel 105 mit den beiden Steckern 1501, 1502, und einem I²C-Kabel 106. Weiterhin sind die Schnittstellenanschlüsse 102 und 1901 vorgesehen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Anschlussbox zur Übertragung von einem Signal zwischen einem Feldgerät (109) und einem Bediengerät (104), die Anschlussbox (100) aufweisend:
einen Feldgeräteanschluss (101) zum Anschluss der Box (100) an das Feldgerät (109);
einen Schnittstellenanschluss (102) zum Anschluss der Box (100) an einen Schnittstellenadapter (103);
wobei der Feldgeräteanschluss (101) und der Schnittstellenanschluss (102) zur Übertragung des Signals kommunizierfähig miteinander gekoppelt sind;
wobei der Schnittstellenanschluss (102) zum direkten Anschluss der Box (100) an ein Anzeige- und Bediengerät ausgeführt ist; und
wobei das Feldgerät (109) ein Füllstandmessgerät oder ein Druckmessgerät ist.

2. Anschlussbox nach Anspruch 1,
wobei das Signal ausgewählt ist aus der Gruppe bestehend aus einem HART-Signal, einem I²C Signal, einem Profibus-Signal, einem Fieldbus Foundation Signal, einem 4...20 mA Signal und einem Schaltsignal.

3. Anschlussbox nach Anspruch 1 oder 2,
wobei der Feldgeräteanschluss (101) zum Anschluss an eine HART-Leitung (112) ausgeführt ist.

4. Anschlussbox nach Anspruch 2,
wobei der Feldgeräteanschluss (101) zum Anschluss an die HART-Leitung (112) ein HART-Kabel (105) mit zwei Anschlusssteckern (1501, 1502) aufweist.

5. Anschlussbox nach Anspruch 1 oder 2,
wobei der Feldgeräteanschluss (101) zum Anschluss an einen I²C-Bus ausgeführt ist.

6. Anschlussbox nach Anspruch 5,
wobei der Feldgeräteanschluss (101) zum Anschluss an den I²C-Bus ein I²C-Bus-Kabel (106) aufweist.

7. Anschlussbox nach einem der vorhergehenden Ansprüche,
wobei der Feldgeräteanschluss (101) einen Adapterstecker (108) zum Anschluss an das Feldgerät aufweist; und
wobei der Adapterstecker (108) derart kodierte Anschlüsse aufweist, dass ein falsches Anschließen des Adapterstecker (108) an das Feldgerät verhindert wird.

8. Anschlussbox nach einem der vorhergehenden Ansprüche,
wobei die Anschlussbox zur Signalübertragung von dem Bediengerät (104) zu dem Feldgerät ausgeführt ist;
wobei es sich bei dem Signal um Parametrierungsdaten zur Parametrierung des Feldgeräts handelt.

9. Anschlussbox nach einem der vorhergehenden Ansprüche,
wobei die Anschlussbox zur Signalübertragung von dem Feldgerät zu dem Bediengerät (104) ausgeführt ist;
wobei es sich bei dem Signal um Messdaten des Feldgeräts handelt.

10. Anschlussbox nach einem der vorhergehenden Ansprüche, weiterhin aufweisend:
eine Energieversorgung zur autarken Versorgung des Schnittstellenadapters (103) mit elektrischer Energie.

11. Anschlussbox nach Anspruch 10,
wobei die Energieversorgung einen aufladbaren Akkumulator und ein Solarzellenmodul aufweist;
wobei das Solarzellenmodul zum Aufladen des Akkumulators ausgeführt ist.

12. Anschlussbox nach einem der vorhergehenden Ansprüche,
wobei die Anschlussbox (100) einen von außen zugänglichen Hohlraum aufweist, der zur Lagerung von einem HART-Kabel (105), einem I²C-Bus-Kabel (106), einem USB-Kabel (107) und einem Adapterstecker (108) ausgeführt ist.

13. Anschlussbox nach einem der vorhergehenden Ansprüche,
wobei der Feldgeräteanschluss (101) als Funkschnittstelle zum drahtlosen Übertragung des Signals zwischen der Box (100) und dem Feldgerät (109) ausgebildet ist.

14. Anschlussbox nach einem der vorhergehenden Ansprüche,
wobei der Schnittstellenanschluss (102) Schleifkontakte zum Anschluss der Box (100) an den Schnittstellenadapter (103) aufweist.

15. Anschlussbox nach einem der vorhergehenden Ansprüche, weiterhin aufweisend:
einen zweiten Schnittstellenanschluss zum Anschluss der Box (100) an ein Bediengerät (401).

16. Verwendung einer Anschlussbox nach einem der Ansprüche 1 bis 15 zur Füllstandmessung oder Druckmessung und zur Übertragung von einem Signal zwischen einem Feldgerät und einem Bediengerät (104);
wobei das Feldgerät ein Füllstandmessgerät oder ein Druckmessgerät ist.

17. Verfahren zur Übertragung von einem Signal zwischen einem Feldgerät (109) und einem Bediengerät (104) mit einer Anschlussbox nach einem der Ansprüche 1 bis 15, das Verfahren aufweisend die Schritte:
Anschluss der Box (100) an das Feldgerät (109);
Anschluss der Box (100) an einen Schnittstellenadapter (103);
Übertragung des Signals vom Feldgerät (109) über den Feldgeräteanschluss (101) an den Schnittstellenanschluss (102) und das Bediengerät (104);
wobei das Feldgerät (109) ein Füllstandmessgerät oder ein Druckmessgerät ist.
